# FASCICULE DE BREVET EUROPEEN

(11) **EP 4 253 031 B1**
(45) Date de publication et mention de la délivrance du brevet: **06.08.2025**
(21) Numéro de dépôt: 23161790.3
(22) Date de dépôt: 14.03.2023
(51) Int. Cl.: B32B 3/12, G10K 11/172, F02K 1/82, F02C 7/045, B32B 5/02

(54) **PANNEAU ACOUSTIQUE COMPRENANT AU MOINS DEUX STRUCTURES ALVÉOLAIRES IMBRIQUÉES L'UNE DANS L'AUTRE, AÉRONEF COMPORTANT AU MOINS UN TEL PANNEAU ACOUSTIQUE**
AKUSTIKPLATTE MIT MINDESTENS ZWEI IN EINEM ANDEREN GESCHACHTELTEN WABENSTRUKTUREN, FLUGZEUG MIT MINDESTENS EINER SOLCHEN AKUSTIKPLATTE
ACOUSTIC PANEL COMPRISING AT LEAST TWO HONEYCOMB STRUCTURES NESTED IN ONE ANOTHER, AIRCRAFT COMPRISING AT LEAST ONE SUCH ACOUSTIC PANEL

(30) Priorité: 01.04.2022 FR 2202974
(43) Date de publication de la demande: 04.10.2023
(73) Titulaire: AIRBUS OPERATIONS (S.A.S.), 31060 Toulouse (FR)
(72) Inventeur: TEIGNE, Manuel, 31060 TOULOUSE (FR); RAVISE, Florian, 31060 TOULOUSE (FR); CALIMAN, Laurent, 31060 TOULOUSE (FR)
(74) Mandataire: Fantin, Laurent

(56) Documents cités:
- EP-A1- 3 552 951
- GB-A- 1 490 923
- US-A1- 2010 148 001
- US-A1- 2014 326 536
- US-B1- 6 328 258

## Description

La présente demande se rapporte à un panneau acoustique comprenant au moins deux structures alvéolaires imbriquées l'une dans l'autre ainsi qu'à un aéronef comportant au moins un tel panneau acoustique.

Selon un mode de réalisation, un panneau acoustique comprend des première et deuxième structures alvéolaires superposées, positionnées entre une couche réflectrice (imperméable aux ondes acoustiques) et une première couche acoustiquement résistive (poreuse aux ondes acoustiques) en contact avec un environnement extérieur dans lequel se propagent des ondes acoustiques, une deuxième couche acoustiquement résistive poreuse étant intercalée entre les première et deuxième structures alvéolaires.

Selon une configuration, les première et deuxième structures alvéolaires se présentent sous la forme de plaques qui comprennent des faces planes orientées l'une vers l'autre.

Compte tenu de cette géométrie, il est difficile de correctement positionner les première et deuxième structures alvéolaires l'une par rapport à l'autre et de maintenir cette position afin d'obtenir un fonctionnement optimal du traitement acoustique.

Le document US 6 328 258 B1 décrit une structure d'admission d'air pour moteur d'avion, comprenant un panneau acoustique formé de deux matériaux alvéolaires disposés entre deux couches externes.

Le document US 2014/326536 A1 décrit un panneau acoustique comportant deux structures alvéolaires adjacentes séparées par une couche poreuse, et prises en sandwich entre une couche poreuse et une couche réfléchissante.

Le document US 2010/148001 décrit un panneau de cabine d'avion pour l'absorption acoustique dans un espace intérieur, comprenant deux couches externes et une première structure alvéolaires disposé entre un décrochement d'une deuxième structure alvéolaire.

La présente invention vise à remédier à tout ou partie des inconvénients de l'art antérieur. A cet effet, l'invention a pour objet un panneau acoustique comprenant un premier bord longitudinal, une première couche acoustiquement résistive, une deuxième couche réflectrice, au moins des première et deuxième structures alvéolaires intercalées entre les première et deuxième couches ainsi qu'au moins une troisième couche acoustiquement résistive intercalée entre les première et deuxième structures alvéolaires, la première couche acoustiquement résistive et la deuxième couche réflectrice étant jointives au niveau du premier bord longitudinal. La première structure alvéolaire présente une première face, une deuxième face opposée à la première face et en contact avec la deuxième couche réflectrice ainsi qu'un premier chant orienté vers le premier bord longitudinal du panneau acoustique, la deuxième structure alvéolaire comprenant une première face en contact avec la première couche acoustiquement résistive et une deuxième face opposée à la première face ainsi que des premier et deuxième chants reliant les première et deuxième faces, le premier chant de la deuxième structure alvéolaire étant orienté vers le premier bord longitudinal du panneau acoustique.

Selon l'invention, la première structure alvéolaire comprend un décrochement qui s'étend à partir de la première face en direction de la deuxième face et forme un logement dimensionné pour loger la deuxième structure alvéolaire et la troisième couche acoustiquement résistive, la deuxième structure alvéolaire étant positionnée dans le logement de manière à ce que les premières faces des première et deuxième structures alvéolaires soient coplanaires et en contact avec la première couche acoustiquement résistive, que les premiers chants des première et deuxième structures alvéolaires soient coplanaires et que le deuxième chant de la deuxième structure alvéolaire soit en contact avec le décrochement.

Selon l'invention, les première et deuxième structures alvéolaires sont imbriquées l'une dans l'autre et correctement positionnées l'une par rapport à l'autre grâce au décrochement, ce qui contribue à optimiser le traitement acoustique.

Selon une autre caractéristique, le panneau acoustique comprend au moins un renfort intercalé entre la première couche acoustiquement résistive et la deuxième couche réflectrice, entre le premier bord longitudinal du panneau acoustique et les premiers chants des première et deuxième structures alvéolaires ; le renfort présentant une première surface s'étendant dans un plan commun à la première face de la deuxième structure alvéolaire, une deuxième surface s'étendant dans un plan commun à la deuxième face de la première structure alvéolaire, une troisième surface en contact avec les premiers chants des première et deuxième structures alvéolaires ainsi qu'une quatrième surface inclinée reliant les première et deuxième surfaces.

Selon une autre caractéristique, la première surface présente une dimension transversale supérieure à 1 cm et inférieure à 5 cm.

Selon une autre caractéristique, le renfort est une structure alvéolaire qui présente des alvéoles débouchant au niveau des première et deuxième surfaces du renfort.

Selon une autre caractéristique, les alvéoles du renfort ont une section inférieure à celle des première et deuxième structures alvéolaires.

Selon une autre caractéristique, les alvéoles du renfort présentent une largeur comprise entre 3 et 6 mm.

Selon une autre caractéristique, la deuxième couche réflectrice comprend une extension qui s'étend au-delà de la deuxième surface du renfort.

Selon un premier mode de réalisation, la première couche s'étend de manière continue sur les première et deuxième structures alvéolaires, la quatrième surface du renfort et l'extension de la deuxième couche réflectrice.

Selon un deuxième mode de réalisation, la première couche comprend une première partie acoustiquement résistive qui s'étend sur les première et deuxième structures alvéolaires et au moins partiellement sur la première surface du renfort ainsi qu'une deuxième partie qui s'étend au moins partiellement sur la première surface du renfort, sur la quatrième surface du renfort et sur l'extension de la couche réflectrice, les première et deuxième parties comportant une zone de chevauchement au droit de la première surface du renfort.

Selon une autre caractéristique, les première et deuxième structures alvéolaires comportent des alvéoles présentant une largeur supérieure ou égale à 12,7 mm.

L'invention a également pour objet un aéronef comprenant au moins un panneau acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe transversale d'une partie d'un panneau acoustique illustrant un mode de réalisation de l'invention,
- La figure 2 est une coupe transversale des différents éléments du panneau acoustique visible sur la figure 1, avant son assemblage,
- La figure 3 est une coupe transversale d'un bord d'un panneau acoustique illustrant un mode de réalisation de l'invention,
- La figure 4 est une coupe transversale d'une porte d'un inverseur de poussée d'un aéronef illustrant un mode de réalisation de l'invention.

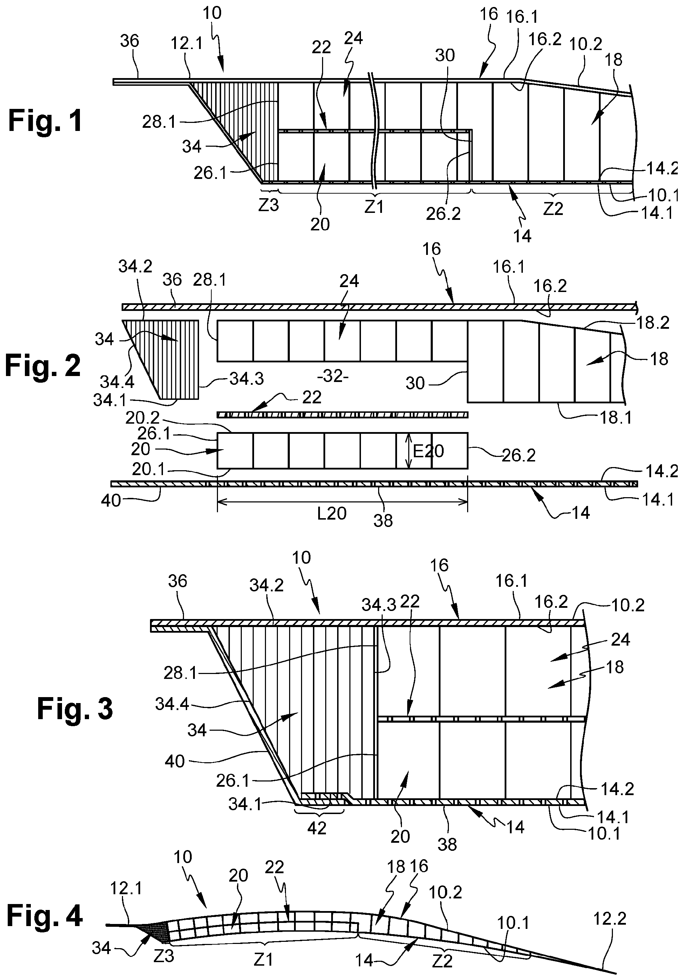

Selon un mode de réalisation visible sur les figures 1 et 2, un panneau acoustique 10 comprend une première face 10.1 en contact avec un environnement dans lequel se propagent des ondes acoustiques ainsi qu'une deuxième face 10.2 opposée à la première face 10.1. Ce panneau acoustique 10 s'étend d'un premier bord longitudinal 12.1 jusqu'à un deuxième bord longitudinal 12.2.

Selon une application, le panneau acoustique 10 forme une porte d'un inverseur de poussée d'un ensemble de propulsion d'un aéronef. Bien entendu, l'invention n'est pas limitée à cette application. Ainsi, le panneau acoustique 10 peut être utilisé dans différentes zones d'un aéronef. Quelles que soient les applications, un aéronef comprend au moins un panneau acoustique 10.

Le panneau acoustique 10 comprend au moins des première et deuxième zones Z1, Z2. Selon une configuration, la première zone Z1 est positionnée entre le premier bord longitudinal 12.1 du panneau acoustique 10 et la deuxième zone Z2. La deuxième zone Z2 est positionnée entre le deuxième bord longitudinal 12.2 du panneau acoustique 10 et la première zone Z1, les première et deuxième zones Z1, Z2 étant jointives.

Selon un mode de réalisation, le panneau acoustique 10 comprend une première couche 14 acoustiquement résistive, poreuse aux ondes acoustiques, qui s'étend au moins sur les première et deuxième zones Z1, Z2 et présente une face extérieure 14.1 formant la première face 10.1 du panneau acoustique 10 ainsi qu'une face intérieure 14.2 opposée à la face extérieure 14.1. Le panneau acoustique 10 comprend également une deuxième couche 16 réflectrice qui s'étend au moins sur les première et deuxième zones Z1, Z2 et présente une face extérieure 16.1 formant la deuxième face 10.2 du panneau acoustique 10 ainsi qu'une face intérieure 16.2 opposée à la face extérieure 16.1.

Au niveau de la deuxième zone Z2, le panneau acoustique 10 comprend, à partir de la première face 10.1 du panneau acoustique 10, la première couche 14 acoustiquement résistive, une première structure alvéolaire 18 et la deuxième couche 16 réflectrice. Au niveau de cette deuxième zone Z2, le panneau acoustique 10 comprend une unique structure alvéolaire 18. La première structure alvéolaire 18 présente une première face 18.1 en contact avec la face intérieure 14.2 de la première couche 14 acoustiquement résistive ainsi qu'une deuxième face 18.2 en contact avec la face intérieure 16.2 de la deuxième couche 16 réflectrice.

Au niveau de la première zone Z1, le panneau acoustique 10 comprend, à partir de la première face 10.1, la première couche 14 acoustiquement résistive, une deuxième structure alvéolaire 20, au moins une troisième couche 22 acoustiquement résistive (poreuse aux ondes acoustiques), une troisième structure alvéolaire 24 et la deuxième couche 16 réflectrice.

La deuxième structure alvéolaire 20 comprend une première face 20.1 en contact avec la face intérieure 14.2 de la première couche 14 acoustiquement résistive ainsi qu'une deuxième face 20.2 en contact avec la troisième couche 22 acoustiquement résistive. La deuxième structure alvéolaire 20 présente une épaisseur E20 correspondant à la distance séparant les première et deuxième faces 20.1, 20.2.

La deuxième structure alvéolaire 20 comprend un premier chant 26.1 orienté vers le premier bord longitudinal 12.1 du panneau acoustique 10 et un deuxième chant 26.2 opposé au premier chant 26.1, les premier et deuxième chants 26.1, 26.2 reliant les première et deuxième faces 20.1, 20.2. La deuxième structure alvéolaire 20 présente une dimension transversale L20 correspondant à la distance séparant les premier et deuxième chants 26.1, 26.2.

Selon une particularité de l'invention, les première et troisième structures alvéolaires 18, 24 forment une unique et même structure alvéolaire appelée par la suite première structure alvéolaire 18. Au niveau de la première zone Z1, la deuxième face 18.2 de la première structure alvéolaire 18 est également en contact avec la couche réflectrice 18. Cette première structure alvéolaire 18 comprend un premier chant 28.1 orienté vers le premier bord longitudinal 12.1 du panneau acoustique 10.

Cette première structure alvéolaire 18 comprend un décrochement 30 qui s'étend à partir de la première face 18.1 en direction de la deuxième face 18.2 et forme un logement 32 dimensionné pour loger la deuxième structure alvéolaire 20 et la troisième couche 22 acoustiquement résistive.

Ainsi, le logement 32 présente une première dimension, prise perpendiculairement à la première couche 14 acoustiquement résistive, sensiblement égale à la somme de l'épaisseur de la troisième couche 22 acoustiquement résistive et de l'épaisseur E20 de la deuxième structure alvéolaire 20 afin que la première face 20.1 de la deuxième structure alvéolaire 20 soit sensiblement coplanaire avec la première face 18.1 de la première structure alvéolaire 18.

Le logement 32 présente une deuxième dimension, prise parallèlement à la première couche 14 acoustiquement résistive et perpendiculairement au premier bord longitudinal 12.1 du panneau acoustique 10, sensiblement égale à la dimension transversale L20 de la deuxième structure alvéolaire 20 afin que les premiers chants 26.1, 28.1 des première et deuxième structures alvéolaires 18, 20 soient sensiblement coplanaires lorsque le deuxième chant 26.2 de la deuxième structure alvéolaire 20 est en contact avec le décrochement 30.

Selon l'invention, les première et deuxième structures alvéolaires 18, 20 sont imbriquées l'une dans l'autre et correctement positionnées l'une par rapport à l'autre grâce au décrochement 30, ce qui contribue à optimiser le traitement acoustique, les alvéoles de la première structure alvéolaire 18 étant sensiblement alignées avec celles de la deuxième structure alvéole 20. Selon un mode opératoire, la première structure alvéolaire 18 est usinée par ultrason pour obtenir le décrochement 30 et le logement 32.

Selon un mode de réalisation, chacune des première et deuxième structures alvéolaires 18, 20 présente des alvéoles avec une section importante. Pour la présente demande, une alvéole présente une section importante si son diamètre ou si la plus petite distance séparant deux faces opposées d'une alvéole, appelée largeur, est supérieure ou égale à 12,7 mm. Selon une configuration, les alvéoles des première et deuxième structures alvéolaires 18, 20 présentent une largeur de l'ordre de 19 mm. Les alvéoles des première et deuxième structures alvéolaires 18, 20 ont sensiblement la même section.

Selon un premier agencement visible sur la figure 1, les première et deuxième faces 10.1, 10.2, 18.1, 18.2, 20.1, 20.2 du panneau acoustique 10 ainsi que des première et deuxième structures alvéolaires 18, 20 sont planes.

Selon un deuxième agencement visible sur la figure 4, les première et deuxième faces 10.1, 10.2, 18.1, 18.2, 20.1, 20.2 du panneau acoustique 10 ainsi que des première et deuxième structures alvéolaires 18, 20 sont courbes.

Selon un mode de réalisation, la première couche 14 acoustiquement résistive et la deuxième couche 16 réflectrice sont jointives au niveau de chacun des premier et deuxième bords longitudinaux 12.1, 12.2 du panneau acoustique 10.

Selon un mode de réalisation, au niveau du deuxième bord longitudinal 12.2 du panneau acoustique 10, les première et deuxième faces de la première structure alvéolaire 18 ne sont pas parallèles entre elles, mais forment entre elles un angle inférieur à 45°.

Selon un mode de réalisation, le panneau acoustique 10 comprend au moins un renfort 34 intercalé entre la première couche 14 acoustiquement résistive et la deuxième couche 16 réflectrice, entre le premier bord longitudinal 12.1 du panneau acoustique 10 et les première et deuxième structures alvéolaires 18, 20. Ce renfort 34 présente une première surface 34.1 située approximativement dans le prolongement de la première face 20.1 de la deuxième structure alvéolaire 20, une deuxième surface 34.2 située dans le prolongement de la deuxième face 18.2 de la première structure alvéolaire 18, une troisième surface 34.3 en contact avec les premiers chants 26.1, 28.1 des première et deuxième structures alvéolaires 18, 20 ainsi qu'une quatrième surface 34.4 inclinée reliant les première et deuxième surfaces 34.1, 34.2. La première surface 34.1 présente une dimension transversale inférieure à celle de la deuxième surface 34.2.

En présence d'un renfort 34, les première et deuxième structures alvéolaires 18, 20 n'ont pas besoin d'avoir des chants 26.1, 28.1 inclinés, ce qui contribue à éviter les pertes de traitement acoustique. De plus, la deuxième structure alvéolaire 20 est parfaitement immobilisée par rapport à la première structure alvéolaire 18, entre le décrochement 30 et le renfort 34. Ainsi, les première et deuxième structures alvéolaires 18, 20 sont correctement positionnées l'une par rapport à l'autre et conservent ce positionnement, ce qui contribue à optimiser le traitement acoustique.

La première surface 34.1 présente une dimension transversale supérieure à 1 cm, inférieure à 5 cm. Cette première surface 34.1 doit présenter une dimension transversale la plus faible possible pour ne pas trop altérer le traitement acoustique et doit être suffisamment large pour éviter un phénomène d'écrasement des première et deuxième structures alvéolaires 18, 20 à larges alvéoles.

Le renfort 34 est une troisième structure alvéolaire qui présente des alvéoles débouchant au niveau des première et deuxième surfaces 34.1, 34.2. Les alvéoles du renfort 34 ont une section inférieure à celle des première et deuxième structures alvéolaires 18, 20. Les alvéoles du renfort 34 présentent une largeur inférieure à 11 mm. Selon une configuration, les alvéoles de la structure alvéolaire du renfort 34 présentent une largeur comprise entre 3 et 6 mm.

En présence d'un renfort 34 sous la forme d'une structure alvéolaire, le panneau acoustique 10 comprend une troisième zone Z3 au droit du renfort 34. Cette zone Z3 peut assurer un traitement acoustique si la première couche 14 est, au droit du renfort 34, acoustiquement résistive et configurée pour laisser passer les ondes acoustiques.

Selon un mode de réalisation, la deuxième couche 16 réflectrice est conformée comme la deuxième face 10.2 du panneau acoustique 10. En présence d'un renfort 34, la deuxième couche 16 réflectrice comprend une extension 36 qui s'étend au-delà de la deuxième surface 34.2 du renfort 34.

Selon un premier mode de réalisation visible sur la figure 1, la première couche 14 s'étend de manière continue sur les première et deuxième structures alvéolaires 18, 20, la quatrième surface 34.4 du renfort 34 et l'extension 36 de la deuxième couche 16 réflectrice.

Selon un deuxième mode de réalisation visible sur la figure 3, la première couche 14 comprend une première partie 38 acoustiquement résistive et poreuse aux ondes acoustiques qui s'étend sur les première et deuxième structure alvéolaires 18, 20 et au moins partiellement sur la première surface 34.1 du renfort 34 ainsi qu'une deuxième partie 40, qui peut être non poreuse, qui s'étend au moins partiellement sur la première surface 34.1 du renfort, sur la quatrième surface 34.4 du renfort 34 et sur l'extension 36 de la couche réflectrice 16, les première et deuxième parties 38, 40 comportant une zone de chevauchement 42 au droit de la première surface 34.1 du renfort 34 où elles sont étroitement liées. Ainsi, la deuxième partie 40 assure la jonction entre la première partie 38 acoustiquement résistive et la deuxième couche 16 réflectrice.

Selon l'invention, les première et deuxième structures alvéolaires 18,20 présentent des formes simples. Le renfort 34 épouse les formes des première et deuxièmes structures alvéolaires ainsi que des première et deuxième couches 14, 16. Le renfort 34 présente toutes les complexités du bout du panneau (en termes de courbure, de découpes, de pentes). Ainsi, le renfort 34 concentre les formes complexes et les singularités du panneau acoustique 10.

Selon un mode opératoire, les première et deuxième structures alvéolaires 18, 20 ainsi que le renfort 34 sont réalisés indépendamment les uns des autres. La première structure alvéolaire 18 et le renfort 34 sont usinés par ultrason aux côtes finales puis les première et deuxième structures alvéolaires 18, 20, le renfort 34 ainsi que la troisième couche 22 acoustiquement résistive sont assemblés afin d'obtenir une structure sur laquelle sont rapportées la deuxième couche 16 réflectrice et la première couche 14 acoustiquement résistive.

Selon une autre mode opératoire, les première et deuxième structures alvéolaires 18, 20, le renfort 34 ainsi que la troisième couche 22 acoustiquement résistive sont assemblés puis usinés par ultrason aux côtes finales une fois assemblés.

Quel que soit le mode opératoire, la première couche 14 acoustiquement résistive et la deuxième couche 16 réflectrice sont positionnées après l'assemblage des première et deuxième structures alvéolaires 18, 20, du renfort 34 ainsi que de la troisième couche 22 acoustiquement résistive.

La deuxième couche 16 réflectrice peut être obtenue par drapage ou par une technique de placement de fibres sur l'assemblage des première et deuxième structures alvéolaires 18, 20, du renfort 34 ainsi que de la troisième couche 22 acoustiquement résistive.

Selon le premier mode de réalisation, toute la première couche 14 est obtenue par drapage ou par une technique de placement de fibres sur l'assemblage des première et deuxième structures alvéolaires 18, 20, du renfort 34 ainsi que de la troisième couche 22 acoustiquement résistive.

Selon le deuxième mode de réalisation, la première partie 38 de la première couche 14 acoustiquement résistive est obtenue par drapage ou par une technique de placement de fibres sur l'assemblage des première et deuxième structures alvéolaires 18, 20, du renfort 34 ainsi que de la troisième couche 22 acoustiquement résistive. La deuxième partie 40 de la première couche 14 est réalisée par drapage ou par une technique de placement de fibres. Elle est ensuite rapportée sur l'assemblage des première et deuxième structures alvéolaires 18, 20, du renfort 34 ainsi que de la troisième couche 22 acoustiquement résistive, puis reliée à l'extension 36 de la deuxième couche 16 réflectrice et à la première partie 38 de la première couche 14 acoustiquement résistive au niveau de la zone de chevauchement 42.

## Revendications

1. Panneau acoustique comprenant un premier bord longitudinal (12.1), une première couche (14) acoustiquement résistive, une deuxième couche (16) réflectrice, au moins des première et deuxième structures alvéolaires (18, 20) intercalées entre les première et deuxième couches (14, 16) ainsi qu'au moins une troisième couche (22) acoustiquement résistive intercalée entre les première et deuxième structures alvéolaires (18, 20), la première couche (14) acoustiquement résistive et la deuxième couche (16) réflectrice étant jointives au niveau du premier bord longitudinal (12.1), la première structure alvéolaire présentant une première face (18.1), une deuxième face (18.2) opposée à la première face (18.1) et en contact avec la deuxième couche (16) réflectrice ainsi qu'un premier chant (28.1) orienté vers le premier bord longitudinal (12.1) du panneau acoustique (10), la deuxième structure alvéolaire (20) comprenant une première face (20.1) en contact avec la première couche (14) acoustiquement résistive et une deuxième face (20.2) opposée à la première face (20.1) ainsi que des premier et deuxième chants (26.1, 26.2) reliant les première et deuxième faces (20.1, 20.2), le premier chant (26.1) de la deuxième structure alvéolaire (20) étant orienté vers le premier bord longitudinal (12.1) du panneau acoustique (10) ; **caractérisé en ce que** la première structure alvéolaire (18) comprend un décrochement (30) qui s'étend à partir de la première face (18.1) en direction de la deuxième face (18.2) et forme un logement (32) dimensionné pour loger la deuxième structure alvéolaire (20) et la troisième couche (22) acoustiquement résistive, la deuxième structure alvéolaire (20) étant positionnée dans le logement (32) de manière à ce que les premières faces (18.1, 20.1) des première et deuxième structures alvéolaires (18, 20) soient coplanaires et en contact avec la première couche (14) acoustiquement résistive, que les premiers chants (26.1, 28.1) des première et deuxième structures alvéolaires (18, 20) soient coplanaires et que le deuxième chant (26.2) de la deuxième structure alvéolaire (20) soit en contact avec le décrochement (30).

2. Panneau acoustique selon la revendication 1, **caractérisé en ce que** le panneau acoustique comprend au moins un renfort (34) intercalé entre la première couche (14) acoustiquement résistive et la deuxième couche (16) réflectrice, entre le premier bord longitudinal (12.1) du panneau acoustique (10) et les premiers chants (26.1, 28.1) des première et deuxième structures alvéolaires (18, 20), le renfort (34) présentant une première surface (34.1) s'étendant dans un plan commun à la première face (20.1) de la deuxième structure alvéolaire (20), une deuxième surface (34.2) s'étendant dans un plan commun à la deuxième face (18.2) de la première structure alvéolaire (18), une troisième surface (34.3) en contact avec les premiers chants (26.1, 28.1) des première et deuxième structures alvéolaires (18, 20) ainsi qu'une quatrième surface (34.4) inclinée reliant les première et deuxième surfaces (34.1, 34.2).

3. Panneau acoustique selon la revendication précédente, **caractérisé en ce que** la première surface (34.1) présente une dimension transversale supérieure à 1 cm et inférieure à 5 cm.

4. Panneau acoustique selon la revendication 2 ou 3, **caractérisé en ce que** le renfort (34) est une structure alvéolaire qui présente des alvéoles débouchant au niveau des première et deuxième surfaces (34.1, 34.2) du renfort (34).

5. Panneau acoustique selon la revendication précédente, **caractérisé en ce que** les alvéoles du renfort (34) ont une section inférieure à celle des première et deuxième structures alvéolaires (18, 20).

6. Panneau acoustique selon la revendication précédente, **caractérisé en ce que** les alvéoles du renfort (34) présentent une largeur comprise entre 3 et 6 mm.

7. Panneau acoustique selon l'une des revendications 2 à 6, **caractérisé en ce que** la deuxième couche (16) réflectrice comprend une extension (36) qui s'étend au-delà de la deuxième surface (34.2) du renfort (34).

8. Panneau acoustique selon la revendication précédente, **caractérisé en ce que** la première couche (14) s'étend de manière continue sur les première et deuxième structures alvéolaires (18, 20), la quatrième surface (34.4) du renfort (34) et l'extension (36) de la deuxième couche (16) réflectrice.

9. Panneau acoustique selon la revendication 7, **caractérisé en ce que** la première couche (14) comprend une première partie (38) acoustiquement résistive qui s'étend sur les première et deuxième structures alvéolaires (18, 20) et au moins partiellement sur la première surface (34.1) du renfort (34) ainsi qu'une deuxième partie (40) qui s'étend au moins partiellement sur la première surface (34.1) du renfort (34), sur la quatrième surface (34.4) du renfort (34) et sur l'extension (36) de la couche réflectrice (16), les première et deuxième parties (38, 40) comportant une zone de chevauchement (42) au droit de la première surface (34.1) du renfort (34).

10. Panneau acoustique selon l'une des revendications précédentes, **caractérisé en ce que** les première et deuxième structures alvéolaires (18, 20) comportent des alvéoles présentant une largeur supérieure ou égale à 12,7 mm.

11. Aéronef comprenant au moins un panneau acoustique selon l'une des revendications précédentes.

## Patentansprüche

1. Akustikplatte mit einer ersten Längskante (12.1), einer ersten schalldämpfenden Schicht (14), einer zweiten reflektierenden Schicht (16), wenigstens einer ersten und einer zweiten Wabenstruktur (18, 20), die zwischen der ersten und der zweiten Schicht (14, 16) angeordnet sind, sowie wenigstens einer dritten schalldämpfenden Schicht (22), die zwischen der ersten und der zweiten Wabenstruktur (18, 20) angeordnet ist, wobei die erste schalldämpfende Schicht (14) und die zweite reflektierende Schicht (16) im Bereich der ersten Längskante (12.1) aneinander gesetzt sind und wobei die erste Wabenstruktur eine erste Seite (18.1), eine zweite Seite (18.2), die der ersten Seite (18.1) gegenüberliegt und mit der zweiten reflektierenden Schicht (16) in Kontakt steht, sowie eine erste Kante (28.1) aufweist, die der ersten Längskante (12.1) der Akustikplatte (10) zugewandt ist, wobei die zweite Wabenstruktur (20) eine erste Seite (20.1) in Kontakt mit der ersten schalldämpfenden Schicht (14) und eine zweite Seite (20.2), die der ersten Seite (20.1) gegenüberliegt, sowie erste und zweite Kanten (26.1, 26.2) aufweist, die die erste und zweite Seite (20.1, 20.2) verbinden, wobei die erste Kante (26.1) der zweiten Wabenstruktur (20) der ersten Längskante (12.1) der Akustikplatte (10) zugewandt ist, **dadurch gekennzeichnet, dass** die erste Wabenstruktur (18) einen Einzug (30) umfasst, der sich von der ersten Seite (18.1) in Richtung der zweiten Seite (18.2) erstreckt und eine Aufnahme (32) bildet, die so bemessen ist, dass sie die zweite Wabenstruktur (20) und die dritte schalldämpfende Schicht (22) aufnimmt, wobei die zweite Wabenstruktur (20) in der Aufnahme (32) so angeordnet ist, dass die ersten Flächen (18.1, 20.1) der ersten und zweiten Wabenstruktur (18, 20) koplanar sind und mit der ersten schalldämpfenden Schicht (14) in Kontakt stehen, dass die ersten Kanten (26.1, 28.1) der ersten und zweiten Wabenstruktur (18, 20) koplanar sind und dass die zweite Kante (26.2) der zweiten Wabenstruktur (20) mit dem Einzug (30) in Kontakt steht.

2. Akustikplatte nach Anspruch 1, **dadurch gekennzeichnet, dass** die Akustikplatte wenigstens eine Verstärkung (34) aufweist, die zwischen der ersten schalldämpfenden Schicht (14) und der zweiten reflektierenden Schicht (16), zwischen der ersten Längskante (12.1) der Akustikplatte (10) und den ersten Kanten (26.1, 28.1) der ersten und zweiten Wabenstruktur (18, 20) eingefügt ist, wobei die Verstärkung (34) eine erste Oberfläche (34.1) aufweist, die sich in einer gemeinsamen Ebene mit der ersten Seite (20.1) der zweiten Wabenstruktur (20) erstreckt, eine zweite Oberfläche (34.2), die sich in einer gemeinsamen Ebene mit der zweiten Seite (18.2) der ersten Wabenstruktur (18) erstreckt, eine dritte Oberfläche (34.3), die mit den ersten Kanten (26.1, 28.1) der ersten und zweiten Wabenstruktur (18, 20) in Kontakt steht, sowie eine geneigte vierte Fläche (34.4), die die erste und zweite Fläche (34.1, 34.2) verbindet.

3. Akustikplatte nach dem vorhergehenden Anspruch, **dadurch gekennzeichnet, dass** die erste Oberfläche (34.1) eine Querabmessung von mehr als 1 cm und weniger als 5 cm aufweist.

4. Akustikplatte nach Anspruch 2 oder 3, **dadurch gekennzeichnet, dass** die Verstärkung (34) eine Wabenstruktur ist, die Zellen aufweist, die an der ersten und zweiten Oberfläche (34.1, 34.2) der Verstärkung (34) münden.

5. Akustikplatte nach dem vorhergehenden Anspruch, **dadurch gekennzeichnet, dass** die Waben der Verstärkung (34) einen kleineren Querschnitt als die erste und zweite Wabenstruktur (18, 20) haben.

6. Akustikplatte nach dem vorhergehenden Anspruch, **dadurch gekennzeichnet, dass** die Zellen der Verstärkung (34) eine Breite zwischen 3 und 6 mm aufweisen.

7. Akustikplatte nach einem der Ansprüche 2 bis 6, **dadurch gekennzeichnet, dass** die zweite reflektierende Schicht (16) eine Verlängerung (36) umfasst, die sich über die zweite Oberfläche (34.2) der Verstärkung (34) hinaus erstreckt.

8. Akustikplatte nach dem vorhergehenden Anspruch, **dadurch gekennzeichnet, dass** sich die erste Schicht (14) durchgehend über die erste und zweite Wabenstruktur (18, 20), die vierte Oberfläche (34.4) der Verstärkung (34) und die Verlängerung (36) der zweiten reflektierenden Schicht (16) erstreckt.

9. Akustikplatte nach Anspruch 7, **dadurch gekennzeichnet, dass** die erste Schicht (14) einen ersten schalldämpfenden Teil (38) aufweist, der sich über die erste und zweite Wabenstruktur (18, 20) und zumindest teilweise über die erste Oberfläche (34.1) der Verstärkung (34) erstreckt, sowie einen zweiten Teil (40), der sich zumindest teilweise über die erste Oberfläche (34.1) der Verstärkung (34), über die vierte Oberfläche (34.4) der Verstärkung (34) und über die Verlängerung (36) der reflektierenden Schicht (16) erstreckt, wobei der erste und der zweite Teil (38, 40) einen überlappenden Bereich (42) an der ersten Oberfläche (34.1) der Verstärkung (34) aufweisen.

10. Akustikplatte nach einem der vorhergehenden Ansprüche, **dadurch gekennzeichnet, dass** die erste und die zweite Wabenstruktur (18, 20) Waben mit einer Breite von 12,7 mm oder mehr aufweisen.

11. Luftfahrzeug mit wenigstens einer akustischen Platte nach einem der vorhergehenden Ansprüche.

## Claims

1. Acoustic panel comprising a first longitudinal edge (12.1), a first acoustically resistive layer (14), a second reflective layer (16), at least first and second cellular structures (18, 20) interposed between the first and second layers (14, 16), and at least a third acoustically resistive layer (22) interposed between the first and second cellular structures (18, 20), the first acoustically resistive layer (14) and the second reflective layer (16) being contiguous at the first longitudinal edge (12.1), the first cellular structure having a first face (18.1), a second face (18.2) that is opposite to the first face (18.1) and that is in contact with the second reflective layer (16), and a first edge face (28.1) oriented toward the first longitudinal edge (12.1) of the acoustic panel (10), the second cellular structure (20) comprising a first face (20.1) in contact with the first acoustically resistive layer (14) and a second face (20.2) opposite to the first face (20.1), and also first and second edge faces (26.1, 26.2) connecting the first and second faces (20.1, 20.2), the first edge face (26.1) of the second cellular structure (20) being oriented toward the first longitudinal edge (12.1) of the acoustic panel (10); wherein the first cellular structure (18) comprises a set-back portion (30) which extends from the first face (18.1) in the direction of the second face (18.2) and which forms a recess (32) dimensioned to accommodate the second cellular structure (20) and the third acoustically resistive layer (22), the second cellular structure (20) being positioned in the recess (32) in such a way that the first faces (18.1, 20.1) of the first and second cellular structures (18, 20) are coplanar and in contact with the first acoustically resistive layer (14), that the first edge faces (26.1, 28.1) of the first and second cellular structures (18, 20) are coplanar and that the second edge face (26.2) of the second cellular structure (20) is in contact with the set-back portion (30).

2. Acoustic panel as claimed in claim 1, wherein the acoustic panel comprises at least one reinforcement (34) interposed between the first acoustically resistive layer (14) and the second reflective layer (16), between the first longitudinal edge (12.1) of the acoustic panel (10) and the first edge faces (26.1, 28.1) of the first and second cellular structures (18, 20), the reinforcement (34) having a first surface (34.1) extending in a plane common to the first face (20.1) of the second cellular structure (20), a second surface (34.2) extending in a plane common to the second face (18.2) of the first cellular structure (18), a third surface (34.3) in contact with the first edge faces (26.1, 28.1) of the first and second cellular structures (18, 20), and a fourth inclined surface (34.4) connecting the first and second surfaces (34.1, 34.2).

3. Acoustic panel as claimed in the preceding claim, wherein the first surface (34.1) has a transverse dimension greater than 1 cm and smaller than 5 cm.

4. Acoustic panel as claimed in claim 2 or 3, wherein the reinforcement (34) is a cellular structure which has cells opening out at the first and second surfaces (34.1, 34.2) of the reinforcement (34).

5. Acoustic panel as claimed in the preceding claim, wherein the cells of the reinforcement (34) have a cross section smaller than that of the first and second cellular structures (18, 20).

6. Acoustic panel as claimed in the preceding claim, wherein the cells of the reinforcement (34) have a width of between 3 and 6 mm.

7. Acoustic panel as claimed in one of claims 2 to 6, wherein the second, reflective layer (16) comprises an extension (36) which extends beyond the second surface (34.2) of the reinforcement (34).

8. Acoustic panel as claimed in the preceding claim, wherein the first layer (14) extends continuously over the first and second cellular structures (18, 20), the fourth surface (34.4) of the reinforcement (34) and the extension (36) of the second, reflective layer (16).

9. Acoustic panel as claimed in claim 7, wherein the first layer (14) comprises a first acoustically resistive part (38) which extends over the first and second cellular structures (18, 20) and at least partially over the first surface (34.1) of the reinforcement (34), and a second part (40) which extends at least partially over the first surface (34.1) of the reinforcement (34), over the fourth surface (34.4) of the reinforcement (34) and over the extension (36) of the reflective layer (16), the first and second parts (38, 40) having a zone of overlap (42) in line with the first surface (34.1) of the reinforcement (34).

10. Acoustic panel as claimed in one of the preceding claims, wherein the first and second cellular structures (18, 20) have cells having a width greater than or equal to 12.7 mm.

11. Aircraft comprising at least one acoustic panel as claimed in one of the preceding claims.
